# EUROPEAN PATENT APPLICATION

(11) **EP 4 625 768 A2**
(43) Date of publication of application: **01.10.2025**
(21) Application number: 25163233.7
(22) Date of filing: 12.03.2025
(51) Int. Cl.: H02K 1/2733, H02K 15/03

(54) **MOTOR DEVICE AND MANUFACTURING METHOD OF ROTOR**

(30) Priority: 28.03.2024 JP 2024053802
(71) Applicant: Mitsuba Corporation, Kiryu-shi, Gunma 376-8555 (JP)
(72) Inventor: MAKABE, Yoichiro, Kiryu-shi, Gunma, 376-8555 (JP)
(74) Representative: Winter, Brandl - Partnerschaft mbB

(57) **Abstract**

A ring magnet (43) and a rotor core (42) are disposed coaxially with high precision even in the case where variations occur in dimensional accuracy of components. A rotor (40) includes: a rotation shaft (41); a rotor core (42) mounted to the rotation shaft (41); a ring magnet (43) mounted to an outer circumferential part of the rotor core (42); and a first opposing member (44) mounted to the rotation shaft (41) and opposed to the ring magnet (43) in an axial direction of the rotation shaft (41). The first opposing member (44) is provided with a first taper part (44e) inclined with respect to the axial direction of the rotation shaft (41). The ring magnet (43) is provided with a first inner circumferential corner part (43b) abutted against the first taper part (44e) in the axial direction of the rotation shaft (41).

## Description

### [Technical Field]

The disclosure relates to a motor device and a manufacturing method of a rotor.

### [Background Art]

For example, Patent Document 1 describes a brushless motor for an electric brake device mounted in vehicles such as automobiles. The brushless motor described in Patent Document 1 includes a stator fixed to a motor case, and a rotor rotatably accommodated on the inner side of the stator.

The rotor includes a shaft, a rotor core fixed to the shaft, a ring magnet fixed to an outer circumferential part of the rotor core by an adhesive, and a magnet cover mounted to an end part of the rotor core.

Furthermore, multiple protrusions extending in an axial direction of the shaft are provided at the magnet cover, and the protrusions extend to the inner side of the ring magnet. Accordingly, the axis of the ring magnet and the axis of the rotor core are configured to be coaxial.

### [Related Art Documents]

### [Patent Documents]

[Patent Document 1] Japanese Patent Application Laid-Open No. 2019-161921

### SUMMARY OF INVENTION

### [Problem to Be Solved by Invention]

In the technique described in Patent Document 1, to dispose the axis of the ring magnet and the axis of the rotor core coaxially, multiple protrusions provided at the magnet cover made of resin are inserted to the inner side of the ring magnet from the axial direction of the shaft. Thus, if there are variations in the dimensional accuracy of the magnet cover and the ring magnet, there is a risk that the ring magnet may rattle in the radial direction or the protrusions may not be able to be inserted to the inner side of the ring magnet.

An objective of the disclosure is to provide a motor device and a manufacturing method of a rotor capable of disposing a ring magnet and a rotor core coaxially with high precision, even in the case of occurrence of variations in dimensional accuracy of components.

### [Means for Solving Problem]

An aspect of a motor device is a motor device including: a stator; and a rotor rotatably provided on a radially inner side of the stator. The rotor includes: a rotation shaft; a rotor core mounted to the rotation shaft; a ring magnet mounted to an outer circumferential part of the rotor core; and an opposing member mounted to the rotation shaft and opposed to the ring magnet in an axial direction of the rotation shaft. One of the ring magnet or the opposing member is provided with a taper part inclined with respect to the axial direction of the rotation shaft. The other of the ring magnet or the opposing member is provided with an abutting part abutted against the taper part in the axial direction of the rotation shaft.

An aspect of a manufacturing method of a rotor is a manufacturing method of a rotor rotatably provided on a radially inner side of a stator. The manufacturing method of a rotor includes: a first process of press-fitting a rotor core to a rotation shaft and positioning the rotor core at a specified position of the rotation shaft; a second process of press-fitting an opposing member from an output part side driving a driving target in an axial direction of the rotation shaft, and abutting the opposing member against the rotor core; a third process of applying an adhesive to an outer circumferential part of the rotor core; and a fourth process of mounting a ring magnet from a side opposite to the output part side in the axial direction of the rotation shaft, and abutting a taper part provided at one of the ring magnet or the opposing member against an abutting part provided at the other of the ring magnet or the opposing member.

### [Effects of Invention]

According to the disclosure, it is possible to realize a motor device and a manufacturing method of a rotor capable of disposing a ring magnet and a rotor core coaxially with high precision, even in the case of occurrence of variations in dimensional accuracy of components.

### BRIEF DESCRIPTION OF DRAWINGS

FIG. 1 is a perspective view showing a seat motor mounted in a vehicle.
FIG. 2 is a cross-sectional view along an axial direction of a rotation shaft of the seat motor in FIG. 1.
FIG. 3 is an enlarged cross-sectional view corresponding to FIG. 2, showing the vicinity of a first opposing member.
FIG. 4 is an enlarged cross-sectional view corresponding to FIG. 2, showing the vicinity of a second opposing member.
FIG. 5 is a perspective view of the first opposing member alone as viewed from a speed reduction mechanism part side.
FIG. 6 is a perspective view of the first opposing member alone as viewed from a rotor core side.
FIG. 7 is a perspective view of the second opposing member alone as viewed from the rotor core side.
FIG. 8 is a perspective view of the second opposing member alone as viewed from a sensor board side.
FIG. 9 is an exploded perspective view showing a rotor, a first planetary gear reducer, and a second planetary gear reducer.
FIG. 10 is a view illustrating a <rotor core mounting process>.
FIG. 11 is a view illustrating a <first opposing member mounting process>.
FIG. 12 is a view illustrating an <adhesive application process>.
FIG. 13 is a view illustrating a <ring magnet mounting process>.
FIG. 14 is a view illustrating a <second opposing member abutting process>.

### EMBODIMENTS FOR IMPLEMENTING INVENTION

Hereinafter, an embodiment of the disclosure will be described in detail with reference to the drawings.

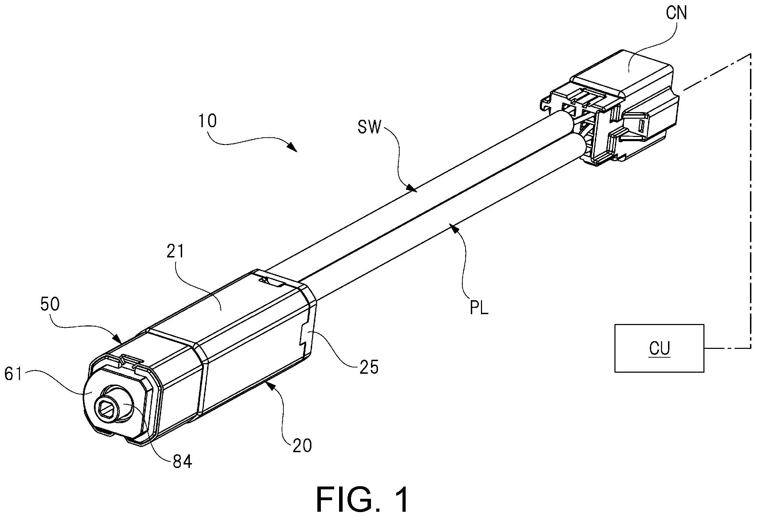

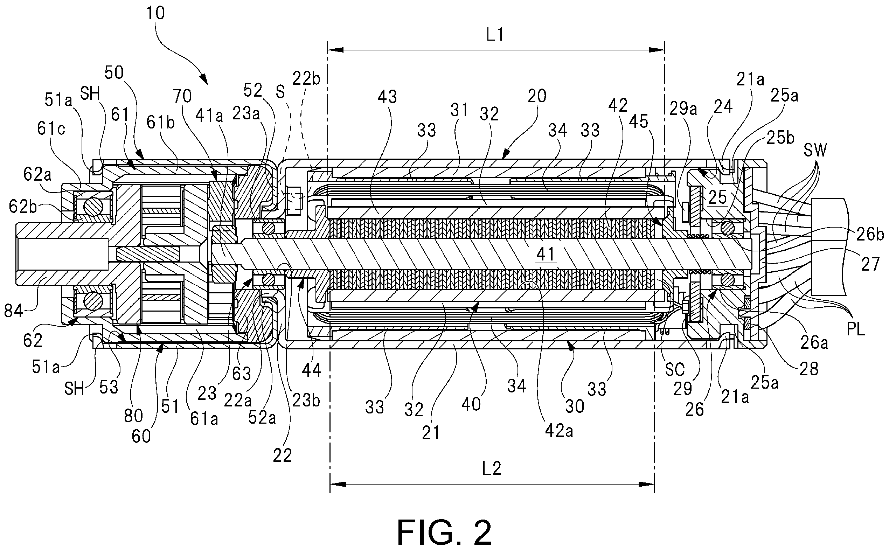

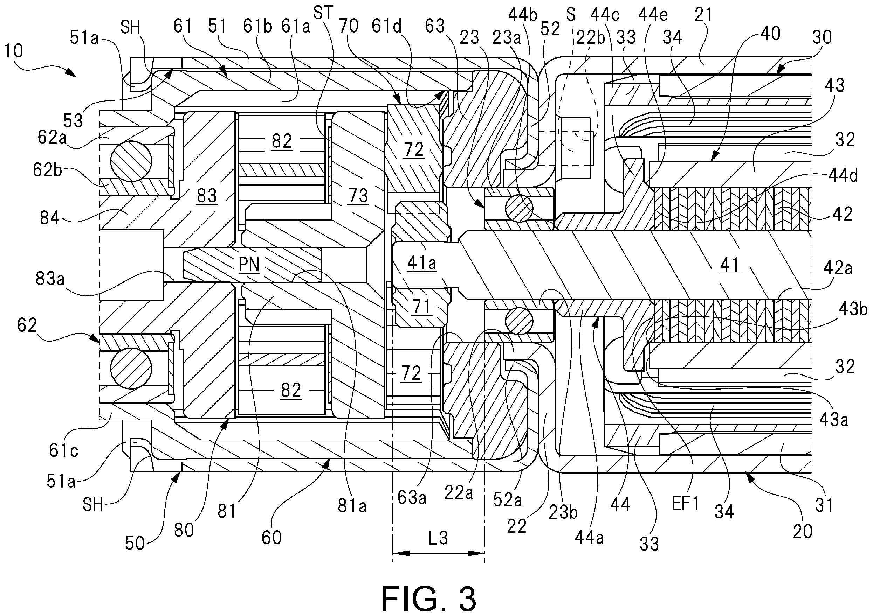

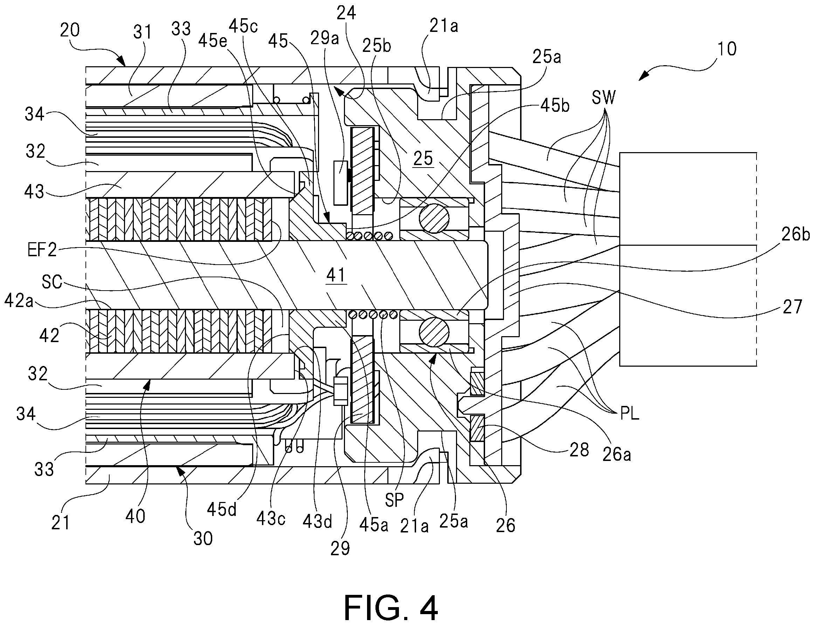

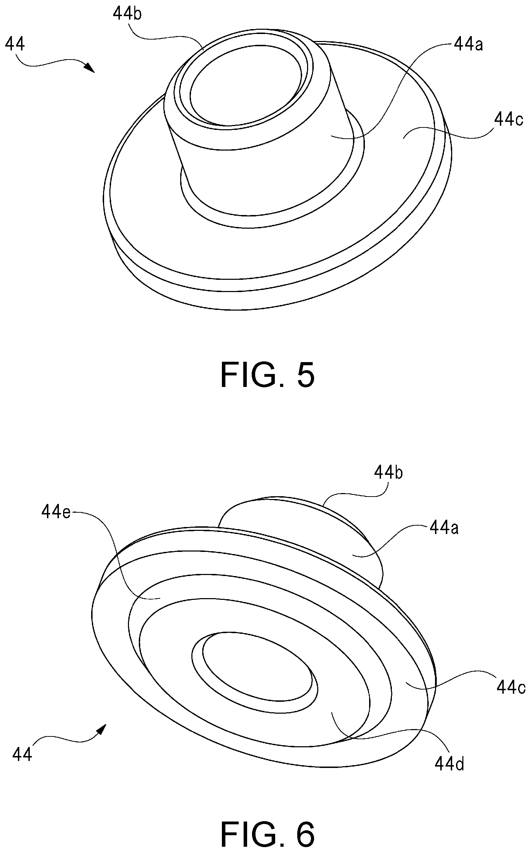

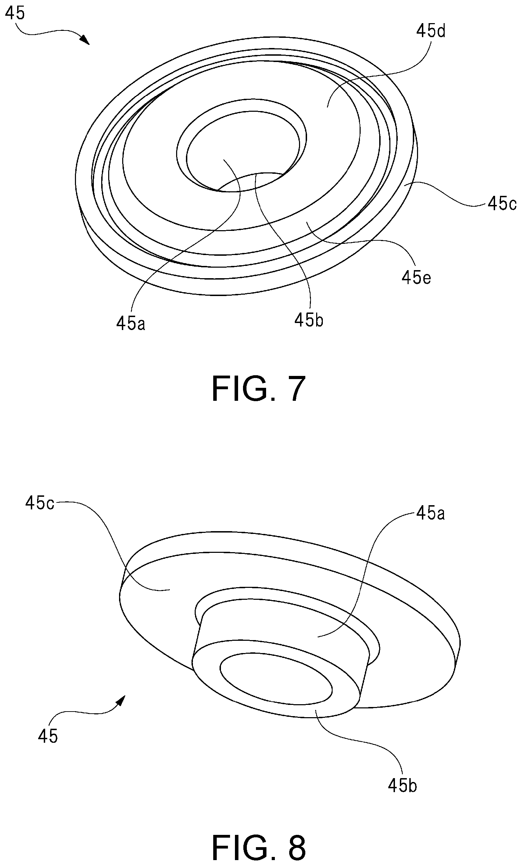

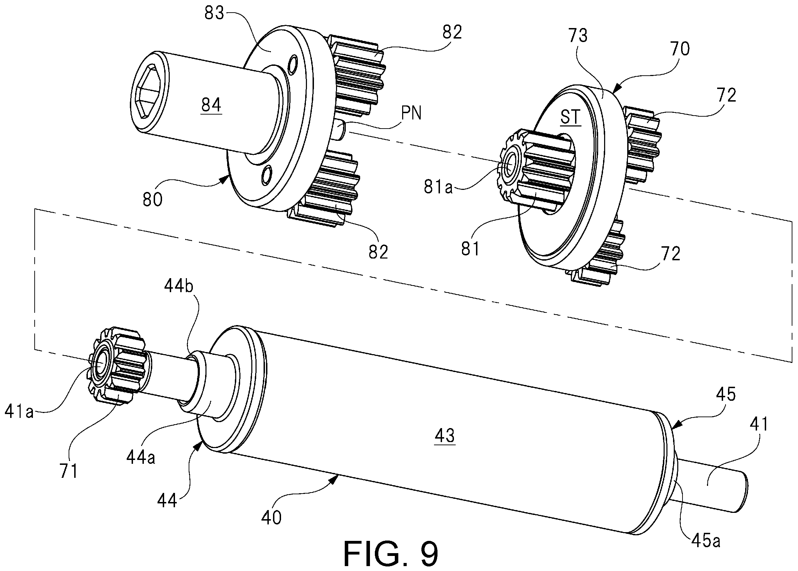

FIG. 1 shows a perspective view of a seat motor mounted in a vehicle. FIG. 2 shows a cross-sectional view along an axial direction of a rotation shaft of the seat motor in FIG. 1. FIG. 3 shows an enlarged cross-sectional view corresponding to FIG. 2, illustrating the vicinity of a first opposing member. FIG. 4 shows an enlarged cross-sectional view corresponding to FIG. 2, illustrating the vicinity of a second opposing member. FIG. 5 shows a perspective view of the first opposing member alone as viewed from a speed reduction mechanism part side. FIG. 6 shows a perspective view of the first opposing member alone as viewed from a rotor core side. FIG. 7 shows a perspective view of the second opposing member alone as viewed from the rotor core side. FIG. 8 shows a perspective view of the second opposing member alone as viewed from a sensor board side. FIG. 9 shows an exploded perspective view illustrating a rotor, a first planetary gear reducer, and a second planetary gear reducer.

### <Overview of electric seat>

A seat motor 10 shown in FIG. 1 is a driving source incorporated in an electric seat mounted in a vehicle such as an automobile. Specifically, the seat motor 10 drives a reclining mechanism of a backrest, a movement mechanism moving the electric seat back and forth, a lifting mechanism raising and lowering a seat part, etc. Accordingly, a driver may adjust a posture and a position of the electric seat to the driver's desired driving position by operating an operation switch disposed, for example, beside the electric seat.

The seat motor 10 corresponds to a motor device in the disclosure.

The seat motor 10 includes a connector CN, and the connector CN is electrically connected to a vehicle-mounted controller CU. Between an electric motor part 20 forming the seat motor 10 and the connector CN, power cords PL supplying driving current to the electric motor part 20 and sensor wires SW sending a rotational state of the electric motor part 20 to the vehicle-mounted controller CU are disposed.

Accordingly, the vehicle-mounted controller CU is capable of storing multiple driving positions (postures of the electric seat) corresponding to drivers of different physiques, for example. Thus, it becomes possible to set to a driving position desired by the driver as needed.

### <Seat motor>

As shown in FIG. 1 to FIG. 4, the seat motor 10 includes an electric motor part 20 and a speed reduction mechanism part 50. The electric motor part 20 and the speed reduction mechanism part 50 are disposed coaxially with each other, and an overall shape of the seat motor 10 is an approximately rod shape that is short and angular.

### <Electric motor part>

The electric motor part 20 includes a motor housing 21. The motor housing 21 is formed into a bottomed tubular shape by, for example, performing deep drawing on a steel plate, and a cross-sectional shape along a direction perpendicular to a longitudinal direction thereof is approximately square.

As shown in FIG. 2 and FIG. 3, a bottom wall part 22 is provided on one axial side (left side in the figure) of the motor housing 21. A bearing support tube 22a is integrally provided at a center of the bottom wall part 22, and an outer ring 23a of a first ball bearing 23 is fixed by press-fitting to the bearing support tube 22a. An approximately 2/3 portion of the other axial side (right side in the figure) of the first ball bearing 23 is press-fitted to the bearing support tube 22a, and an approximately 1/3 portion of the one axial side of the first ball bearing 23 is exposed (protruding) from the bearing support tube 22a to the one axial side thereof.

Herein, the first ball bearing 23 rotatably supports the one axial side of the rotation shaft 41, and an inner ring 23b of the first ball bearing 23 is mounted to the one axial side of the rotation shaft 41. In the axial direction of the rotation shaft 41, the side on which the speed reduction mechanism part 50 of the seat motor 10 is disposed is defined as "one axial side", and the side on which the connector CN of the seat motor 10 is disposed is defined as "other axial side".

In addition, a pair of screw holes 22b (only one is shown in FIG. 2 and FIG. 3) are provided in the bottom wall part 22. Specifically, the pair of screw holes 22b are disposed opposed to each other, centered on the bearing support tube 22a. Then, fixing screws S for fixing the speed reduction mechanism part 50 to the electric motor part 20 are screwed into the respective screw holes 22b.

As shown in FIG. 2 and FIG. 4, an opening part 24 is provided on the other axial side of the motor housing 21, i.e., on the side opposite to the bottom wall part 22 side. A stator 30 and a rotor 40 are incorporated on the inner side of the motor housing 21 via the opening part 24.

A cover member 25 composed of a resin material such as plastic is mounted to the opening part 24. The cover member 25 blocks the opening part 24, and accordingly, dust and the like are prevented from entering inside of the motor housing 21. Herein, multiple engagement recesses 25a are provided at an outer circumferential part of the cover member 25, and engagement claws 21a of the motor housing 21 are engaged with the engagement recesses 25a. Accordingly, the cover member 25 is in a state in which the cover member 25 does not rattle and is prevented from coming off with respect to the motor housing 21.

A bearing support hole 25b is provided at a central of the cover member 25, and an outer ring 26a of a second ball bearing 26 is fixed by press-fitting to the bearing support hole 25b. The second ball bearing 26 rotatably supports the other axial side of the rotation shaft 41, and an inner ring 26b of the second ball bearing 26 is mounted to the other axial side of the rotation shaft 41.

In addition, a conductive member holding plate 27 is mounted to the other axial side of the cover member 25. Three conductive members 28 (only one is shown in the figure) corresponding to U-phase, V-phase, and W-phase (three-phase) are mounted to the cover member 25 side (left side in the figure) of the conductive member holding plate 27. Furthermore, the power cords PL and the sensor wires SW are disposed on the connector CN side (right side in the figure) of the conductive member holding plate 27.

Then, three power cords PL corresponding to U-phase, V-phase, and W-phase are respectively electrically connected to one-end parts of the three conductive members 28. In contrast, coils 34 corresponding to U-phase, V-phase, and W-phase are respectively electrically connected to other-end parts of the three conductive members 28.

**In** addition, a sensor board 29 in an annular shape is mounted to the one axial side of the cover member 25. A total of five sensor wires SW (only four are shown in the figure) are respectively electrically connected to the connector CN side (right side in the figure) of the sensor board 29. Furthermore, three hall elements 29a (only one is shown in the figure) corresponding to U-phase, V-phase, and W-phase are respectively mounted to the stator 30 side (left side in the figure) of the sensor board 29.

Herein, the three hall elements 29a form a rotation sensor that detects a rotational state of the rotor 40 (rotation shaft 41), and are opposed to a ring magnet 43 in the axial direction of the rotation shaft 41. Accordingly, each of the hall elements 29a generates a rectangular signal in response to a change in magnetic poles accompanying rotation of the ring magnet 43. The rectangular signals generated by the hall elements 29a are sent to the vehicle-mounted controller CU (refer to FIG. 1), and accordingly, the vehicle-mounted controller CU is capable of learning about the rotational state of the rotor 40 to control a rotational speed, a rotational direction, and further, a stop position of the rotor 40.

As shown in FIG. 2 to FIG. 4, a stator 30 composed of a ferromagnetic body is fixed on the inner side of the motor housing 21. The stator 30 includes a stator body 31 formed in an approximately tubular shape, and multiple teeth 32 protruding radially inward from the stator body 31. In this embodiment, the number of teeth 32 (equal to the number of slots) is set to 6. Of course, the number of teeth 32 may be set in any manner according to the specifications of the electric motor part 20.

In addition, an insulator 33 composed of a resin material such as plastic is mounted to each of the teeth 32. Coils 34 are wound around the respective teeth 32 via the insulators 33. Herein, coils 34 of a same phase are respectively wound around a pair of teeth 32 that are disposed opposed to each other centered on the rotor 40. In other words, in the circumferential direction of the stator 30, the coils 34 are arranged at equal intervals (60-degree intervals) in the order of U-phase, V-phase, W-phase, U-phase, V-phase, and W-phase.

The stator 30 is fixed by press-fitting a part of an outer circumferential part of the stator body 31 against an inner wall of the motor housing 21. Thus, the stator 30 does not rattle in either the axial direction or the circumferential direction with respect to the motor housing 21. In addition, the conductive members 28 corresponding to U-phase, V-phase, and W-phase are respectively electrically connected to the coils 34 corresponding to U-phase, V-phase, and W-phase.

### <Rotor>

As shown in FIG. 2 to FIG. 4, the rotor 40 is rotatably provided on the radially inner side of the stator 30 with a minute gap (air gap) therebetween. The rotor 40 includes a rotation shaft 41 composed of a stepped round steel bar. Specifically, a small-diameter part 41a is integrally provided on the one axial side of the rotation shaft 41, and a first sun gear 71 forming a first planetary gear reducer 70 of the speed reduction mechanism part 50 is fixed to the small-diameter part 41a.

The small-diameter part 41a drives the first planetary gear reducer 70 including the first sun gear 71, and corresponds to an output part in the disclosure. In addition, a planetary gear reducer 60, which includes the first planetary gear reducer 70 driven by the small-diameter part 41a, corresponds to a driving target in the disclosure.

The one axial side of the rotation shaft 41 is rotatably supported by the first ball bearing 23, and the other axial side of the rotation shaft 41 is rotatably supported by the second ball bearing 26.

In addition, a rotor core 42 formed by laminating multiple steel plates composed of a ferromagnetic body is mounted to an outer circumferential part of the rotation shaft 41. Specifically, the rotor core 42 is firmly fixed at a specified position in the axial direction of the rotation shaft 41 by press-fitting a fixing hole 42a of the rotor core 42 to the rotation shaft 41.

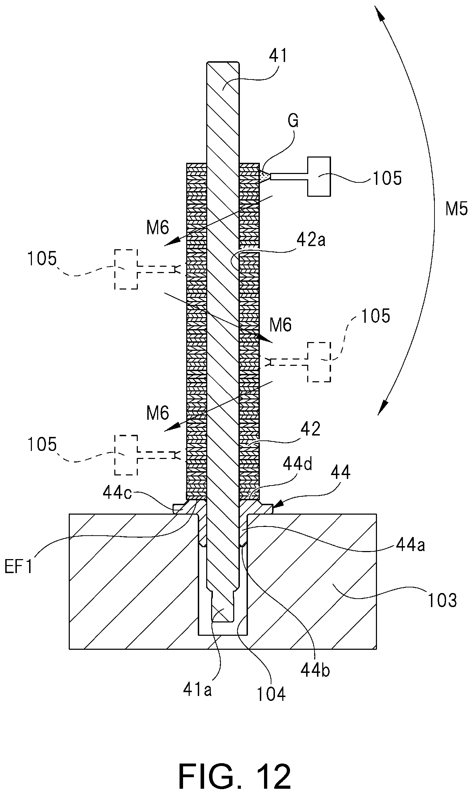

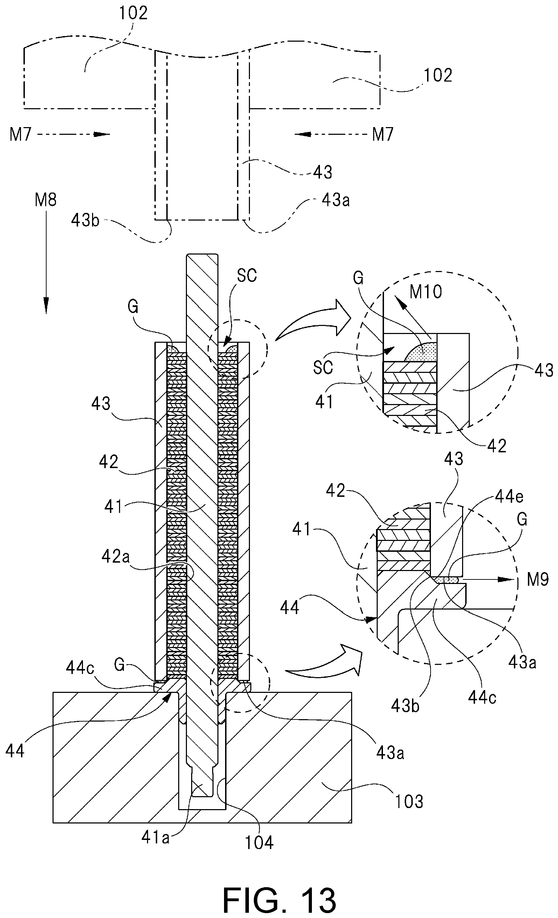

Furthermore, a ring magnet 43 is fixed to an outer circumferential part of the rotor core 42 via an adhesive G (refer to FIG. 12 and FIG. 13). The ring magnet 43 is, for example, a neodymium magnet, and is formed in an approximately tubular shape. In addition, the ring magnet 43 is magnetized such that S pole, N pole, S pole, and N pole (total of 4 poles) are alternately arranged in the circumferential direction thereof. In other words, the electric motor part 20 is a 4-pole 6-slot brushless motor. Of course, the number of poles of the ring magnet 43 may be set in any manner according to the specifications of the electric motor part 20.

Furthermore, in a direction perpendicular to the axial direction of the rotation shaft 41, a minute gap (not shown), in which the adhesive G is interposed, is formed between the ring magnet 43 and the rotor core 42. Accordingly, when mounting the ring magnet 43 to the outer circumferential part of the rotor core 42, the ring magnet 43 does not strongly rub against the rotor core 42.

In addition, as shown in FIG. 3, a first end part 43a is provided on the one axial side of the ring magnet 43, and a first inner circumferential corner part 43b is provided on the radially inner side of the first end part 43a. A first taper part 44e of a first opposing member 44 is abutted against the first inner circumferential corner part 43b. Specifically, the first inner circumferential corner part 43b is in line contact with the first taper part 44e.

In this manner, the first inner circumferential corner part 43b is abutted against the first taper part 44e in the axial direction of the rotation shaft 41. The first inner circumferential corner part 43b corresponds to an abutting part in the disclosure.

Furthermore, as shown in FIG. 4, a second end part 43c is provided on the other axial side of the ring magnet 43, and a second inner circumferential corner part 43d is provided on the radially inner side of the second end part 43c. A second taper part 45e of a second opposing member 45 is abutted against the second inner circumferential corner part 43d. Specifically, the second inner circumferential corner part 43d is in line contact with the second taper part 45e.

In this manner, the second inner circumferential corner part 43d is abutted against the second taper part 45e in the axial direction of the rotation shaft 41. The second inner circumferential corner part 43d corresponds to an abutting part in the disclosure.

Herein, as shown in FIG. 2, an axial length L1 of the ring magnet 43 is greater than an axial length L2 of the rotor core 42 (L1 > L2). In the axial direction of the rotation shaft 41, the first opposing member 44 is abutted against the rotor core 42, and the second opposing member 45 is separated from the rotor core 42.

### <First opposing member>

As shown in FIG. 2 and FIG. 3, the first opposing member 44 is disposed on the one axial side of the rotation shaft 41, i.e., on the small-diameter part 41a side. The first opposing member 44 is composed of a PPS resin (polyphenylene sulfide) containing glass fiber, and is opposed to the ring magnet 43 in the axial direction of the rotation shaft 41.

As shown in FIG. 5 and FIG. 6, the first opposing member 44 includes a first fixed tubular part 44a that is fixed by press-fitting to the rotation shaft 41. A first abutting part 44b in an annular shape abutted against the inner ring 23b of the first ball bearing 23 in the axial direction of the rotation shaft 41 is provided on the one axial side of the first fixed tubular part 44a. Accordingly, the axial position of the rotation shaft 41, to which the first opposing member 44 is fixed, is specified by the first ball bearing 23.

In addition, the first opposing member 44 includes a first annular flat plate part 44c. The first annular flat plate part 44c is formed to have a larger diameter than the first fixed tubular part 44a, and is formed in an approximately plate shape. The first annular flat plate part 44c is integrally provided on the other axial side of the first fixed tubular part 44a in the axial direction of the rotation shaft 41.

A second abutting part 44d in an annular shape abutted against a first end face EF1 (refer to FIG. 3) on the one axial side of the rotor core 42 is provided on the other axial side of the first annular flat plate part 44c. In other words, the first opposing member 44 is abutted against the rotor core 42 in the axial direction of the rotation shaft 41.

The second abutting part 44d protrudes from the first annular flat plate part 44c to the other axial side thereof, and the second abutting part 44d is in surface contact with the first end face EF1 of the rotor core 42. Accordingly, the axial position of the rotor core 42, which is abutted by the first opposing member 44, is specified by the first ball bearing 23 via the first opposing member 44.

As shown in FIG. 3 and FIG. 5, protrusions, recesses, etc. are not formed on the one axial side of the first annular flat plate part 44c. In other words, the one axial side of the first annular flat plate part 44c is an annular flat surface.

Furthermore, as shown in FIG. 3 and FIG. 6, a first taper part 44e in an annular shape is provided at an outer circumferential part of the second abutting part 44d. The first taper part 44e is an inclined surface inclined at an inclination angle of approximately 45 degrees with respect to the axial direction of the rotation shaft 41. Specifically, as shown in FIG. 3, the first taper part 44e is inclined to gradually approach the first annular flat plate part 44c as the first taper part 44e extends radially outward from the second abutting part 44d.

The first taper part 44e corresponds to a taper part in the disclosure.

As shown in FIG. 3, the first inner circumferential corner part 43b of the first end part 43a provided on the one axial side of the ring magnet 43 is in line contact with the first taper part 44e from the other axial side of the rotation shaft 41. In other words, by pressing the ring magnet 43 from the other axial side toward the one axial side, the ring magnet 43 is self-aligned by the first opposing member 44, and accordingly, the axis of the ring magnet 43 and the axis of the rotor core 42 fixed to the rotation shaft 41 are aligned without shifting with respect to each other.

In this manner, the first opposing member 44 has a self-aligning function of performing centering of the ring magnet 43, and corresponds to an opposing member and one of opposing members in the disclosure.

### <Second opposing member>

As shown in FIG. 2 and FIG. 4, the second opposing member 45 is disposed on the other axial side of the rotation shaft 41, i.e., on a side opposite to the small-diameter part 41a side. Similar to the first opposing member 44, the second opposing member 45 is composed of a PPS resin containing glass fiber, and is opposed to the ring magnet 43 in the axial direction of the rotation shaft 41.

As shown in FIG. 7 and FIG. 8, the second opposing member 45 includes a second fixed tubular part 45a that is fixed by press-fitting to the rotation shaft 41. A spring support part 45b in an annular shape supporting the one axial side of a rattle suppression spring SP is provided on the other axial side of the second fixed tubular part 45a.

Herein, the other axial side of the rattle suppression spring SP is supported by the inner ring 26b of the second ball bearing 26. In addition, the rattle suppression spring SP is disposed between the spring support part 45b and the inner ring 26b in a state in which an initial load is applied. Accordingly, the rotor 40 and the rattle suppression spring SP are disposed to be braced between the inner ring 23b of the first ball bearing 23 and the inner ring 26b of the second ball bearing 26.

Thus, the inner rings 23b and 26b of the first ball bearing 23 and the second ball bearing 26 are suppressed from rattling in the axial direction with respect to the outer rings 23a and 26a, respectively. Therefore, it becomes possible to rotate the rotor 40 stably at high speed, and occurrence of mechanical noise is also suppressed.

In addition, the second opposing member 45 includes a second annular flat plate part 45c. The second annular flat plate part 45c is formed to have a larger diameter than the second fixed tubular part 45a, and is formed in an approximately plate shape. The second annular flat plate part 45c is integrally provided on the one axial side of the second fixed tubular part 45a in the axial direction of the rotation shaft 41.

Furthermore, an annular protrusion 45d protruding toward the rotor core 42 by a specified height is provided on the one axial side of the second annular flat plate part 45c. In the axial direction of the rotation shaft 41, an adhesive pool SC, which is an annular space, is formed between a second end face EF2 on the other axial side of the rotor core 42 and the annular protrusion 45d. In other words, the second opposing member 45 is separated from the rotor core 42 in the axial direction of the rotation shaft 41.

As shown in FIG. 4 and FIG. 8, protrusions, recesses, etc. are not formed on the other axial side of the second annular flat plate part 45c. In other words, the other axial side of the second annular flat plate part 45c is an annular flat surface.

In addition, as shown in FIG. 4 and FIG. 7, a second taper part 45e in an annular shape is provided at an outer circumferential part of the annular protrusion 45d. The second taper part 45e is an inclined surface inclined at an inclination angle of approximately 45 degrees with respect to the axial direction of the rotation shaft 41. Specifically, as shown in FIG. 4, the second taper part 45e is inclined to gradually approach the second annular flat plate part 45c as the second taper part 45e extends radially outward from the annular protrusion 45d.

The second taper part 45e corresponds to a taper part in the disclosure.

As shown in FIG. 4, the second inner circumferential corner part 43d of the second end part 43c provided on the other axial side of the ring magnet 43 is in line contact with the second taper part 45e from the one axial side of the rotation shaft 41. In other words, by pressing the second opposing member 45 to the other axial side of the ring magnet 43, the ring magnet 43 is self-aligned by the second opposing member 45, and accordingly, the axis of the ring magnet 43 and the axis of the rotor core 42 fixed to the rotation shaft 41 are aligned without shifting with respect to each other.

In other words, similar to the first opposing member 44, the second opposing member 45 has a self-aligning function of performing centering of the ring magnet 43, and corresponds to an opposing member, the other of opposing members, and another opposing member in the disclosure.

Thus, in this embodiment, by providing the first opposing member 44 and the second opposing member 45 on both axial sides of the ring magnet 43, the axis of the ring magnet 43 and the axis of the rotor core 42 fixed to the rotation shaft 41 are aligned without shifting with respect to each other. The mechanism (action) of self-alignment by the first opposing member 44 and the second opposing member 45 will be described in detail later.

### <Speed reduction mechanism part>

As shown in FIG. 2 and FIG. 3, the speed reduction mechanism part 50 includes a speed reducer housing 51. The speed reducer housing 51 is formed into a bottomed tubular shape by, for example, performing deep drawing on a steel plate, and a cross-sectional shape along a direction perpendicular to the longitudinal direction thereof is approximately square.

An annular bottom wall 52 abutted against the bottom wall part 22 of the motor housing 21 in the axial direction of the rotation shaft 41 is provided on the other axial side of the speed reducer housing 51. A fitting tube 52a, to which the bearing support tube 22a of the motor housing 21 is fitted, is integrally provided at a center of the annular bottom wall 52. Accordingly, the speed reducer housing 51 is disposed coaxially with respect to the motor housing 21.

A pair of screw through holes (not shown) into which the fixing screws S for fixing the speed reduction mechanism part 50 to the electric motor part 20 are inserted are provided in the annular bottom wall 52. Specifically, the pair of screw through holes are respectively opposed to the pair of screw holes 22b provided in the bottom wall part 22 of the motor housing 21 in the axial direction of the rotation shaft 41.

In addition, an opening 53 is provided on the one axial side of the speed reducer housing 51, i.e., on a side opposite to the annular bottom wall 52 side. A planetary gear reducer 60 is incorporated on the inner side of the speed reducer housing 51 via the opening 53. An engagement shoulder part SH is provided on the one axial side of the planetary gear reducer 60, and an engagement claw 51a of the speed reducer housing 51 is engaged with the engagement shoulder part SH. Accordingly, the planetary gear reducer 60 is in a state that the planetary gear reducer 60 does not rattle and is prevented from coming off with respect to the speed reducer housing 51.

The planetary gear reducer 60 includes a gearbox 61 that is formed in an approximately box shape and has an internal gear 61a formed on the radially inner side. The gearbox 61 is composed of a resin material such as plastic and includes a large-diameter part 61b and a small-diameter part 61c. Specifically, the large-diameter part 61b is disposed on the other axial side of the gearbox 61, and the small-diameter part 61c is disposed on the one axial side of the gearbox 61. The internal gear 61a is provided over the entire axial direction of the large-diameter part 61b.

**In** contrast, a third ball bearing 62 having an outer ring 62a and an inner ring 62b is accommodated on the inner side of the small-diameter part 61c. Specifically, the outer ring 62a of the third ball bearing 62 is fixed by press-fitting to the inner side of the small-diameter part 61c, and the inner ring 62b of the third ball bearing 62 rotatably supports an output shaft 84 that forms a second planetary gear reducer 80. The output shaft 84 of the second planetary gear reducer 80 is connected in a manner capable of transmitting power to a reclining mechanism or the like (not shown).

A blocking member 63 in an annular shape that blocks a box opening 61d of the gearbox 61 is provided on the other axial side of the gearbox 61. The blocking member 63 is fixed by press-fitting to the box opening 61d. Specifically, the blocking member 63 is clamped between the gearbox 61 and the annular bottom wall 52 in the axial direction of the rotation shaft 41. In addition, a through hole 63a is provided at a center of the blocking member 63, and the through hole 63a is fitted to an approximately 1/3 portion of the one axial side of the first ball bearing 23.

Accordingly, the axis of the blocking member 63 (planetary gear reducer 60) and the axis of the first ball bearing 23 are aligned without shifting with respect to each other. Thus, the driving force of the rotation shaft 41, which is rotatably supported by the first ball bearing 23, is efficiently transmitted to the planetary gear reducer 60. The first planetary gear reducer 70 disposed on the input side (electric motor part 20 side) and the second planetary gear reducer 80 disposed on the output side (the side on which the reclining mechanism or the like is provided) are accommodated on the inner side of the gearbox 61 and the blocking member 63.

Specifically, the first planetary gear reducer 70 and the second planetary gear reducer 80 are arranged in a manner capable of transmitting power in the axial direction of the rotation shaft 41, and the planetary gear reducer 60 performs two-stage speed reduction. Accordingly, diameter reduction of the planetary gear reducer 60 is realized.

### <First planetary gear reducer>

As shown in FIG. 3 and FIG. 9, the first planetary gear reducer 70 includes a first sun gear 71 that is mounted to the small-diameter part 41a of the rotation shaft 41 and functions as an input part of the first planetary gear reducer 70. The first sun gear 71 is rotated by the rotation shaft 41, is press-fitted and fixed to the small-diameter part 41a, and is disposed coaxially with high precision with respect to the small-diameter part 41a.

In addition, the first planetary gear reducer 70 includes three first planetary gears 72 (only two are shown in the figure) that are meshed with both the internal gear 61a provided at the gearbox 61 and the first sun gear 71, and rotate around the first sun gear 71. The first planetary gears 72 are each rotatably supported by a first carrier 73, which forms the first planetary gear reducer 70. Specifically, the three first planetary gears 72 are disposed at equal intervals (120-degree intervals) in the circumferential direction of the first carrier 73.

The one axial side of the first planetary gear 72 is rotatably abutted against the first carrier 73, and the other axial side of the first planetary gear 72 is rotatably abutted against the blocking member 63. Thus, the three first planetary gears 72 rotate smoothly without rattling in the axial direction of the rotation shaft 41.

Herein, since the first abutting part 44b of the first opposing member 44 is abutted against the inner ring 23b of the first ball bearing 23, the one axial side of the first sun gear 71 is disposed at a specified position separated by a distance L3 from the one axial side of the inner ring 23b. Thus, the first sun gear 71 does not contact the first carrier 73 in the axial direction of the rotation shaft 41, and is properly meshed with each of the first planetary gears 72.

The planetary gear reducer 60 is centered by the first ball bearing 23 via the blocking member 63. Furthermore, the rotation shaft 41 of the rotor 40 is also centered by the first ball bearing 23. Accordingly, the axis of the planetary gear reducer 60 and the axis of the rotor 40 including the first sun gear 71 are aligned with high precision with each other by the first ball bearing 23. Thus, similar to the rotor 40, the planetary gear reducer 60 is also capable of rotating stably at high speed, and generation of mechanical noise is also suppressed.

In addition, a second sun gear 81 that functions as an output part of the first planetary gear reducer 70 and functions as an input part of the second planetary gear reducer 80 is provided on the one axial side of the first carrier 73. The second sun gear 81 is hollow and is disposed on the axis of the first carrier 73.

### <Second planetary gear reducer>

As shown in FIG. 3 and FIG. 9, the second planetary gear reducer 80 includes the second sun gear 81 integrally provided at the first carrier 73 of the first planetary gear reducer 70.

In addition, the second planetary gear reducer 80 includes three second planetary gears 82 (only two are shown in the figure) that are meshed with both the internal gear 61a provided at the gearbox 61 and the second sun gear 81, and rotate around the second sun gear 81. The second planetary gears 82 are each rotatably supported by a second carrier 83, which forms the second planetary gear reducer 80. Specifically, the three second planetary gears 82 are disposed at equal intervals (120-degrees intervals) in the circumferential direction of the second carrier 83.

The one axial side of the second planetary gear 82 is rotatably abutted against the second carrier 83, and the other axial side of the second planetary gear 82 is rotatably abutted against the first carrier 73 via a seat member ST. Thus, the three second planetary gears 82 also rotate smoothly without rattling in the axial direction of the rotation shaft 41.

In addition, an output shaft 84 that functions as an output part of the second planetary gear reducer 80 is integrally provided on the one axial side of the second carrier 83. Herein, the output shaft 84 is rotatably supported by the inner ring 62b of the third ball bearing 62, and the reclining mechanism or the like (not shown) is connected to the output shaft 84 in a manner capable of transmitting power.

Herein, a pin hole 83a is provided on the axis of the second carrier 83, and the one axial side of a support pin PN is mounted to the pin hole 83a. In addition, the other axial side of the support pin PN is mounted to a hollow part 81a provided in the second sun gear 81. The support pin PN has a function of aligning the axis of the first carrier 73 (second sun gear 81) and the axis of the second carrier 83 (output shaft 84) with each other, and supporting both to be relatively rotatable with each other.

In this manner, the planetary gear reducer 60 performs two-stage speed reduction by the first planetary gear reducer 70 and the second planetary gear reducer 80. The rotational speed of the rotor 40 (rotation shaft 41), which is rotated at high speed, is reduced to a specified rotational speed, and the rotational force, which has been reduced in speed and increased in torque, is outputted from the output shaft 84 to the reclining mechanism or the like (not shown).

### <Assembly procedure of rotor>

Next, an assembly procedure of the rotor 40, i.e., a manufacturing method of the rotor 40, will be described in detail with reference to the drawings.

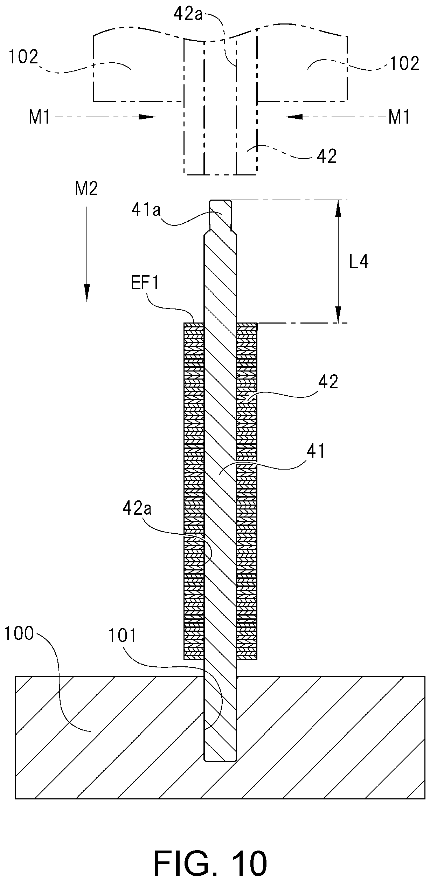

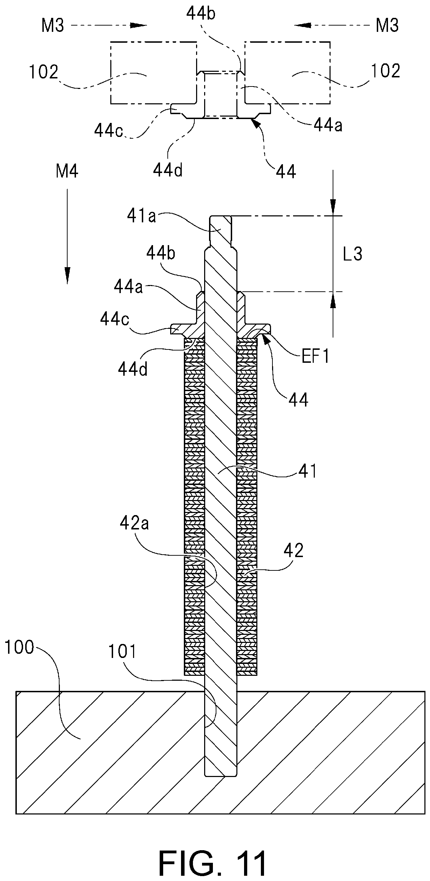

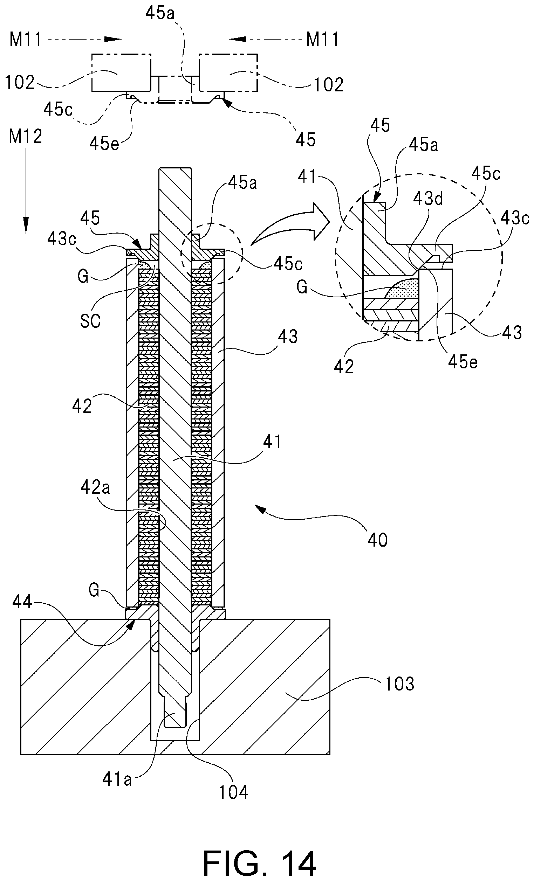

FIG. 10 shows a view illustrating a <rotor core mounting process>. FIG. 11 shows a view illustrating a <first opposing member mounting process>. FIG. 12 shows a view illustrating an <adhesive application process>. FIG. 13 shows a view illustrating a <ring magnet mounting process>. FIG. 14 shows a view illustrating a <second opposing member abutting process>.

### <Rotor core mounting process>

As shown in FIG. 10, first, the rotation shaft 41 and the rotor core 42, which have been manufactured through separate manufacturing processes, are prepared. Next, the rotation shaft 41 is set on a first work table 100. Specifically, the other axial side of the rotation shaft 41, i.e., the side opposite to the small-diameter part 41a side in the axial direction of the rotation shaft 41, is inserted into an insertion hole 101 of the first work table 100. Accordingly, setting of the rotation shaft 41 to the first work table 100 is completed.

Afterward, the rotor core 42 is grasped by a pair of lifting arms 102 capable of rising and lowering with respect to the first work table 100, as indicated by a double-dot dashed line arrow M1. Next, the pair of lifting arms 102 are lowered as indicated by a solid line arrow M2, and the other axial side of the rotor core 42 is brought to face the one axial side of the rotation shaft 41. Then, the pair of lifting arms 102 continue to be lowered, and the fixing hole 42a of the rotor core 42 is press-fitted from the small-diameter part 41a side of the rotation shaft 41.

Subsequently, the lifting arms 102 continue to be further lowered, and the rotor core 42 is positioned at a specified position in the axial direction of the rotation shaft 41 shown in FIG. 10. Specifically, the pair of lifting arms 102 are lowered such that the distance between the first end face EF1 of the rotor core 42 and the end part on the one axial side of the small-diameter part 41a becomes L4. The distance L4, which defines the specified position, is managed with high precision by a controller (not shown) that controls the pair of lifting arms 102.

Accordingly, a press-fitting work (mounting work) of the rotor core 42 to the rotation shaft 41 is ended, and the <rotor core mounting process> is completed.

The <rotor core mounting process> corresponds to a first process in the disclosure.

### <First opposing member mounting process>

Next, as shown in FIG. 11, the first opposing member 44, which has been manufactured through a separate manufacturing process, is prepared. Then, the first opposing member 44 is grasped by the pair of lifting arms 102, as indicated by a double-dot dashed line arrow M3. At this time, the pair of lifting arms 102 are caused to grasp the first fixed tubular part 44a of the first opposing member 44.

Subsequently, the pair of lifting arms 102 are lowered as indicated by a solid line arrow M4, and the other axial side (first annular flat plate part 44c side) of the first opposing member 44 is brought to face the one axial side of the rotation shaft 41. Then, the pair of lifting arms 102 continue to be lowered, and the first fixed tubular part 44a of the first opposing member 44 is press-fitted to the rotation shaft 41 from the small-diameter part 41a side in the axial direction of the rotation shaft 41.

Next, the lifting arms 102 continue to be further lowered, and the first opposing member 44 is positioned at a specified position in the axial direction of the rotation shaft 41 shown in FIG. 11. Specifically, the second abutting part 44d of the first opposing member 44 is abutted against the first end face EF1 of the rotor core 42. Accordingly, the first opposing member 44 is positioned with high precision with respect to the rotation shaft 41 and the rotor core 42 such that the distance between the first abutting part 44b of the first opposing member 44 and the end part on the one axial side of the small-diameter part 41a becomes L3 (refer to FIG. 3).

Accordingly, the first opposing member 44 is abutted against the rotor core 42, a press-fitting work (mounting work) of the first opposing member 44 to the rotation shaft 41 is ended, and the <first opposing member mounting process> is completed.

The <first opposing member mounting process> corresponds to a second process in the disclosure.

### <Adhesive application process>

Next, as indicated by a solid line arrow M5 in FIG. 12, the rotation shaft 41 mounted with the rotor core 42 and the first opposing member 44 is inverted upside down. Then, the first fixed tubular part 44a of the first opposing member 44 is inserted into an insertion hole 104 of a second work table 103. Accordingly, setting of the rotation shaft 41, which is mounted with the rotor core 42 and the first opposing member 44, to the second work table 103 is completed.

Subsequently, an adhesive supply nozzle 105 is brought to face the outer circumferential part on the other axial side (upper side in the figure) of the rotor core 42. Then, the adhesive G is discharged from the adhesive supply nozzle 105, and the adhesive G is applied to the outer circumferential part of the rotor core 42. Specifically, with the adhesive G discharged from the adhesive supply nozzle 105, as indicated by a solid line arrow M6, the adhesive supply nozzle 105 is moved in a spiral pattern from the other axial side toward the one axial side (lower side in the figure) of the rotor core 42 (refer to broken lines).

Accordingly, a specified amount of the adhesive G is applied in a spiral pattern to the outer circumferential part of the rotor core 42, and the <adhesive application process> is completed.

The <adhesive application process> corresponds to a third process in the disclosure.

### <Ring magnet mounting process>

Next, as shown in FIG. 13, the ring magnet 43, which has been manufactured through a separate manufacturing process, is prepared. Then, the ring magnet 43 is grasped by the pair of lifting arms 102, as indicated by a double-dot dashed line arrow M7.

Subsequently, the pair of lifting arms 102 are lowered as indicated by a solid line arrow M8, and the one axial side (first end part 43a side) of the ring magnet 43 is brought to face the other axial side of the rotation shaft 41. Then, the pair of lifting arms 102 continue to be lowered, and the ring magnet 43 is mounted to the outer circumferential part of the rotor core 42 from the side opposite to the small-diameter part 41a side in the axial direction of the rotation shaft 41. At this time, since there is a minute gap (not shown), in which the adhesive G is interposed, between the outer circumferential part of the rotor core 42 and the inner circumferential part of the ring magnet 43, the ring magnet 43 is capable of being easily mounted to the rotor core 42 with a relatively small load.

Next, the pair of lifting arms 102 are further lowered to abut the first inner circumferential corner part 43b of the first end part 43a of the ring magnet 43 against the first taper part 44e of the first opposing member 44 with a specified pressing force. In other words, the first taper part 44e and the first inner circumferential corner part 43b are abutted against each other. Accordingly, the ring magnet 43 and the first opposing member 44 are opposed to each other in the axial direction of the rotation shaft, and the ring magnet 43 is self-aligned by the first opposing member 44. Thus, the axis of the ring magnet 43 and the axis of the rotor core 42 are aligned with each other.

At this time, the adhesive G spreads evenly throughout the minute gap between the outer circumferential part of the rotor core 42 and the inner circumferential part of the ring magnet 43 and fills the minute gap. Herein, excess adhesive G overflows on both axial sides of the rotor core 42, but the application amount of the adhesive G is determined considering occurrence of the excess amount in advance. Thus, the excess adhesive G is suppressed to a necessary minimum amount.

Specifically, as indicated by a solid line arrow M9, the adhesive G that overflows on the one axial side of the rotor core 42 reaches from the minute gap between the outer circumferential part of the rotor core 42 and the inner circumferential part of the ring magnet 43, to between the first end part 43a of the ring magnet 43 and the first annular flat plate part 44c of the first opposing member 44. The excess adhesive G that reaches between the first end part 43a and the first annular flat plate part 44c does not overflow radially outward beyond the ring magnet 43 and the first annular flat plate part 44c.

**In** addition, as indicated by a solid line arrow M10, the adhesive G that overflows on the other axial side of the rotor core 42 reaches from the minute gap between the outer circumferential part of the rotor core 42 and the inner circumferential part of the ring magnet 43 to the adhesive pool SC (refer to FIG. 4). The excess adhesive G that reaches the adhesive pool SC does not overflow to outside the adhesive pool SC.

In this manner, the excess adhesive G does not overflow radially outward beyond the ring magnet 43 and the first annular flat plate part 44c, and does not overflow to outside the adhesive pool SC. Thus, after assembling the rotor 40, a work such as removing the overflowed adhesive G is not required, and simplification of the assembly process of the rotor 40 becomes possible.

Accordingly, the ring magnet 43 is mounted to the outer circumferential part of the rotor core 42, and the <ring magnet mounting process> is completed.

The <ring magnet mounting process> corresponds to a fourth process in the disclosure.

### <Second opposing member abutting process>

Next, as shown in FIG. 14, the second opposing member 45, which has been manufactured through a separate manufacturing process, is prepared. Then, the second opposing member 45 is grasped by the pair of lifting arms 102, as indicated by a double-dot dashed line arrow M11. At this time, the pair of lifting arms 102 is caused to grasp the second fixed tubular part 45a of the second opposing member 45.

Subsequently, the pair of lifting arms 102 are lowered as indicated by a solid line arrow M12, and the one axial side (second annular flat plate part 45c side) of the second opposing member 45 is brought to face the other axial side of the rotation shaft 41. Then, the pair of lifting arms 102 continue to be lowered, and the second fixed tubular part 45a of the second opposing member 45 is press-fitted to the rotation shaft 41 from the side opposite to the small-diameter part 41a side in the axial direction of the rotation shaft 41.

Next, the lifting arms 102 continue to be further lowered, and the second taper part 45e provided at the second opposing member 45 is abutted against the second inner circumferential corner part 43d provided at the ring magnet 43. Accordingly, the ring magnet 43 and the second opposing member 45 are opposed to each other in the axial direction of the rotation shaft 41, and the ring magnet 43 is self-aligned by the second opposing member 45. Thus, the axis of the ring magnet 43 and the axis of the rotor core 42 are aligned with each other.

Herein, by providing the first opposing member 44 and the second opposing member 45 on both axial sides of the ring magnet 43, it is possible to align the axis of the ring magnet 43 with the axis of the rotor core 42 over the entire longitudinal direction of the ring magnet 43. However, a self-aligning work of the ring magnet 43 by the first opposing member 44 and the second opposing member 45 is performed before the adhesive G hardens. As the adhesive G, for example, a thermosetting adhesive that hardens by applying heat may be used.

As described above, the second opposing member 45 is abutted against the ring magnet 43, and the ring magnet 43 is held between the first opposing member 44 and the second opposing member 45 without rattling. Accordingly, the <second opposing member abutting process> is completed, and the assembly work of the rotor 40 is ended.

The <second opposing member abutting process> corresponds to a fifth process in the disclosure.

As described in detail above, according to this embodiment, the rotor 40 includes: a rotation shaft 41; a rotor core 42 mounted to the rotation shaft 41; a ring magnet 43 mounted to an outer circumferential part of the rotor core 42; and a first opposing member 44 and a second opposing member 45 mounted to the rotation shaft 41 and opposed to the ring magnet 43 in an axial direction of the rotation shaft 41. The first opposing member 44 and the second opposing member 45 are provided with a first taper part 44e and a second taper part 45e inclined with respect to the axial direction of the rotation shaft 41, and the ring magnet 43 is provided with a first inner circumferential corner part 43b and a second inner circumferential corner part 43d abutted against the first taper part 44e and the second taper part 45e in the axial direction of the rotation shaft 41.

Accordingly, due to the self-aligning function accompanying the abutment of the first taper part 44e and the second taper part 45e against the first inner circumferential corner part 43b and the second inner circumferential corner part 43d, the axis of the ring magnet 43 and the axis of the rotor core 42 can be aligned without shifting with respect to each other. Thus, even if there are slight variations in the dimensional accuracy of the components, it becomes possible to dispose the ring magnet and the rotor core coaxially with high precision. Consequently, occurrence of variations in product performance can be suppressed, and thus, a need for re-assembly and occurrence of defective products can be eliminated.

In addition, according to this embodiment, the first opposing member 44 and the second opposing member 45 are provided respectively on both sides of the ring magnet 43 in the axial direction of the rotation shaft 41.

Accordingly, over the entire longitudinal direction of the ring magnet 43, the axis of the ring magnet 43 can be aligned with the axis of the rotor core 42. Thus, occurrence of variations in product performance can be further suppressed, and a seat motor 10 with further improved quietness can be realized.

Furthermore, according to this embodiment, one axial side of the rotation shaft 41 is provided with a small-diameter part 41a driving a planetary gear reducer 60. The first opposing member 44 disposed on the small-diameter part 41a side of the rotation shaft 41 is abutted against the rotor core 42 in the axial direction of the rotation shaft 41. The second opposing member 45 disposed on a side opposite to the small-diameter part 41a side of the rotation shaft 41 is separated from the rotor core 42 in the axial direction of the rotation shaft 41.

Accordingly, it becomes possible to press the first opposing member 44 and the second opposing member 45 respectively with an appropriate load from both axial sides of the ring magnet 43, and the axis of the ring magnet 43 and the axis of the rotor core 42 can be aligned more reliably. In addition, in the axial direction of the rotation shaft 41, a gap formed between the ring magnet 43 and the second opposing member 45 may be used as an adhesive pool SC.

In addition, according to this embodiment, since a need for re-assembly of the seat motor 10 and occurrence of defective products can be eliminated, it becomes possible to reduce manufacturing energy required to manufacture the seat motor 10. Accordingly, particularly Goal 7 (Ensure access to affordable, reliable, sustainable and modern energy for all) and Goal 13 (Take urgent action to combat climate change and its impacts) of the Sustainable Development Goals (SDGs) established by the United Nations can be achieved.

The disclosure is not limited to the above embodiment, and obviously, various changes may be made within the scope that does not deviate from the gist thereof. For example, the above embodiment has shown that the first taper part 44e and the second taper part 45e are provided at the first opposing member 44 and the second opposing member 45, and the first inner circumferential corner part 43b and the second inner circumferential corner part 43d are provided on both axial sides of the ring magnet 43, and these are used as a self-aligning function. The disclosure is not limited thereto, and conversely, taper parts may be provided on both axial sides of the ring magnet, and abutting parts abutted against the taper parts may be provided respectively at the first opposing member and the second opposing member. Furthermore, a taper part may be provided at the first opposing member, an abutting part may be provided on the one axial side of the ring magnet, a taper part may be provided on the other axial side of the ring magnet, and an abutting part may be provided at the second opposing member.

**In** addition, the above embodiment has shown the seat motor 10 as an example of the motor device, but the disclosure is not limited thereto, and may also be applied to driving sources for other vehicle-mounted devices, such as a power window device and a sunroof device.

Furthermore, the materials, shapes, dimensions, numbers, arrangement spots, etc. of constituent elements in the above embodiment may be configured in any manner and are not limited to the above embodiment, as long as the disclosure can be achieved.

### [Reference Signs List]

10: seat motor (motor device), 20: electric motor part, 21: motor housing, 21a: engagement claw, 22: bottom wall part, 22a: bearing support tube, 22b: screw hole, 23: first ball bearing, 23a: outer ring, 23b: inner ring, 24: opening part, 25: cover member, 25a: engagement recess, 25b: bearing support hole, 26: second ball bearing, 26a: outer ring, 26b: inner ring, 27: conductive member holding plate, 28: conductive member, 29: sensor board, 29a: hall element, 30: stator, 31: stator body, 32: teeth, 33: insulator, 34: coil, 40: rotor, 41: rotation shaft, 41a: small-diameter part (output part), 42: rotor core, 42a: fixing hole, 43: ring magnet, 43a: first end part, 43b: first inner circumferential corner part (abutting part), 43c: second end part, 43d: second inner circumferential corner part (abutting part), 44: first opposing member (opposing member, one of opposing members), 44a: first fixed tubular part, 44b: first abutting part, 44c: first annular flat plate part, 44d: second abutting part, 44e: first taper part (taper part), 45: second opposing member (opposing member, other of opposing members, another opposing member), 45a: second fixed tubular part, 45b: spring support part, 45c: second annular flat plate part, 45d: annular protrusion, 45e: second taper part (taper part), 50: speed reduction mechanism part, 51: speed reducer housing, 51a: engagement claw, 52: annular bottom wall, 52a: fitting tube, 53: opening, 60: planetary gear reducer (driving target), 61: gearbox, 61a: internal gear, 61b: large-diameter part, 61c: small-diameter part, 61d: box opening, 62: third ball bearing, 62a: outer ring, 62b: inner ring, 63: blocking member, 63a: through hole, 70: first planetary gear reducer, 71: first sun gear, 72: first planetary gear, 73: first carrier, 80: second planetary gear reducer, 81: second sun gear, 81a: hollow part, 82: second planetary gear, 83: second carrier, 83a: pin hole, 84: output shaft, 100: first work table, 101: insertion hole, 102: lifting arm, 103: second work table, 104: insertion hole, 105: adhesive supply nozzle, CN: connector, CU: vehicle-mounted controller, EF1: first end face, EF2: second end face, G: adhesive, PL: power cord, PN: support pin, S: fixing screw, SC: adhesive pool, SH: engagement shoulder part, SP: rattle suppression spring, ST: seat member, SW: sensor wire

## Claims

1. A motor device (10) comprising:
a stator (30); and
a rotor (40) rotatably provided on a radially inner side of the stator (30), wherein
the rotor (40) comprises:
a rotation shaft (41);
a rotor core (42) mounted to the rotation shaft (41);
a ring magnet (43) mounted to an outer circumferential part of the rotor core (42); and
an opposing member (44, 45) mounted to the rotation shaft (41) and opposed to the ring magnet (43) in an axial direction of the rotation shaft (41), wherein
one of the ring magnet (43) or the opposing member (44, 45) is provided with a taper part (44e, 45e) inclined with respect to the axial direction of the rotation shaft (41), and
the other of the ring magnet (43) or the opposing member (44, 45) is provided with an abutting part (43d) abutted against the taper part (44e, 45e) in the axial direction of the rotation shaft (41).

2. The motor device (10) as claimed in claim 1, wherein
the opposing member (44, 45) is provided on both sides of the ring magnet (43) in the axial direction of the rotation shaft (41).

3. The motor device (10) as claimed in claim 2, wherein
one axial side of the rotation shaft (41) is provided with an output part (41a) driving a driving target (60),
one of the opposing members (44) that is disposed on the output part (41a) side of the rotation shaft (41) is abutted against the rotor core (42) in the axial direction of the rotation shaft (41), and
the other of the opposing members (45) that is disposed on a side opposite to the output part (41a) side of the rotation shaft (41) is separated from the rotor core (42) in the axial direction of the rotation shaft (41).

4. A manufacturing method of a rotor (40), which is a manufacturing method of a rotor (40) rotatably provided on a radially inner side of a stator (30), the manufacturing method of a rotor (40) comprising:
a first process of press-fitting a rotor core (42) to a rotation shaft (41) and positioning the rotor core (42) at a specified position of the rotation shaft (41);
a second process of press-fitting an opposing member (44) from an output part (41a) side driving a driving target (60) in an axial direction of the rotation shaft (41), and abutting the opposing member (44) against the rotor core (42);
a third process of applying an adhesive to an outer circumferential part of the rotor core (42); and
a fourth process of mounting a ring magnet (43) from a side opposite to the output part (41a) side in the axial direction of the rotation shaft (41), and abutting a taper part (44e, 45e) provided at one of the ring magnet (43) or the opposing member (44) against an abutting part (43d) provided at the other of the ring magnet (43) or the opposing member (44).

5. The manufacturing method of a rotor (40) as claimed in claim 4, comprising:
preparing another opposing member (45); and
after the fourth process, performing a fifth process of press-fitting the another opposing member (45) from the side opposite to the output part (41a) side in the axial direction of the rotation shaft (41), and abutting the taper part (44e, 45e) or the abutting part (43d) provided at the another opposing member (45) against the abutting part (43d) or the taper part (44e, 45e) provided at the ring magnet (43).
